(19) **Europäisches Patentamt / European Patent Office / Office européen des brevets**

(11) **EP 2 957 883 A2**

(12) # EUROPEAN PATENT APPLICATION

(43) Date of publication:
**23.12.2015 Bulletin 2015/52**

(51) Int Cl.:
**G01M 5/00** *(2006.01)* **G05B 23/02** *(2006.01)*

(21) Application number: **15172274.1**

(22) Date of filing: **16.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.06.2014 IT TO20140484**

(71) Applicant: **Alenia Aermacchi S.p.A.**
**00195 Roma (IT)**

(72) Inventor: **MENAFRO, Felice**
**I-80070 BACOLI (Napoli) (IT)**

(74) Representative: **Deambrogi, Edgardo et al**
**Jacobacci & Partners S.p.A.**
**Corso Emilia 8**
**10152 Torino (IT)**

(54) **METHOD FOR PROGNOSTICS OF AN AIRCRAFT STRUCTURE BASED ON STRUCTURAL TESTING**

(57) A method is described for the prognostics of a structure subjected to loads, in particular an aircraft structure, comprising the steps of:
- determining by structural testing a model of the structure representative of a relationship between loads acting on the structure in at least one simulated operating condition, and a quantity indicative of the state of the structure as modified in the presence of said loads, at a predetermined number of detection points;
- detecting the values of the quantity indicative of the state of the structure at a corresponding predetermined number of detection points of the structure in a condition of use;
- estimating, by means of the model of the structure, the loads acting on the structure in the condition of use on the basis of the detected values of the state quantity;
- correlating the value of the estimated loads acting on the structure in the condition of use with the value of the loads acting on the structure in the corresponding simulated operating condition; and
- determining at least one performance of the aircraft structure based on the outcome of said correlation.

FIG. 1

EP 2 957 883 A2

**Description**

Technical field

The present invention relates in general to a methodology for structural prognostics, and more specifically to a method for the prognostics of a mechanical structure, in particular an aircraft structure, orientated towards the prediction of the structural behaviour of an aircraft or part thereof during its operational life.

Prior art

In the design phase, an aircraft is typically designed to meet the requirements of airworthiness in terms of maintenance, reliability and safety, and to comply with specific competitive values dictated by the market, such as reduction of overall weight and reduced pollution. In particular, the present technological challenges in the aeronautics field relate to the control of aircraft life cycles, the reduction of the weight (and consequently the consumption) of aircraft, and environmental conformity.

When the structural design requirements (such as the manoeuvring diagrams, mission profiles and fatigue cycles) of an aircraft to be designed have been determined, the aircraft is subjected to "full scale" aeronautical certification and validation tests in the laboratory, enabling the set of stress quantities (forces) acting on the aircraft and its individual structures to be related to the response or state quantities of the aircraft and its individual structures (deformations).

In known methodologies for the design, monitoring and maintenance of aircraft, it is extremely useful to be able to reduce unexpected failures by monitoring certain indicators of the state of the aircraft structure.

The knowledge of the state of the aircraft at a given moment of its operational life is also an extremely useful piece of information for the prediction of the structural behaviour of the aircraft in later phases of its operational life, and for making decisions concerning any modifications that improve or degrade the performance of the aircraft while maintaining its operational integrity and safety.

When put into service, the aircraft is monitored periodically according to an inspection protocol determined by the current safety regulations. However, the structural behaviour of the aircraft can only be estimated in broad outlines on the basis of experience, related to the quantities representative of the missions.

According to the prior art, in aeronautics the performance of an aircraft is determined on the basis of the appearance of damage or defects in a mechanical structure of an aircraft, such as a metal or composite structure, for example the fuselage or wing structure, this being determined by a historical reconstruction of events, including events which caused damage due to accidental impact during production (tool impact) or in service (impact of hail, debris or birds), and of the loads borne by the structure, or by an estimate of the fatigue affecting the structure, based on the knowledge of its characteristics of mechanical resistance to typical stresses in service conditions.

However, this technique is costly and imprecise, because it does not reflect the changes and the physical and mechanical conditions of the monitored structure in real time. Furthermore, it cannot be used to predict with sufficient accuracy the physical and mechanical behaviour of the structure in successive moments of its operational life.

Summary of the invention

The general object of the present invention is to provide a methodology for predicting the structural behaviour of aircrafts during their operational life.

A further object of the invention is to provide a method for determining the structural performance of an aircraft, in particular a method for determining the structural performance acceptable for an aircraft in a mission on the basis of its operational history.

Yet another object of the invention is to optimize the performance of the aircraft in order to meet the market requirements for future aircraft, to improve the performance of an aircraft or a fleet of aircraft, to make missions more efficient, and to optimize the inspection of aircraft.

According to the present invention, these objects are achieved by means of a method for the prognostics of a mechanical structure of an aircraft having the characteristics claimed in Claim 1.

Specific embodiments are described in the dependent claims, the content of which is to be considered as an integral part of the present description.

A further object of the invention is a system and a computer program for the prognostics of a mechanical structure as claimed.

Briefly, the present invention provides a method for predicting the structural behaviour of an aircraft which uses, in combination, data from structural load tests, such as the laboratory tests for certification of the aircraft ("Full Scale Static & Fatigue Test"), comprising data representative of the operating loads (the stress spectrum) and service events to which the aircraft (or one of its components) is expected to be subjected during its operational life, and data representative of a quantity indicative of the state of the structure (of the aircraft or its component) as a consequence of the aforesaid operating loads and service events, together with data representative of the aforesaid quantity indicative of the state of the structure (of the aircraft or its component) acquired during the execution of a mission or in a time interval of use.

More specifically, the method proposed by the present invention is based on the characterization of a mechanical structure of the aircraft under examination (the aircraft as a whole or one or more of its components), using structural tests conducted on a prototype structure (a prototype aircraft or prototypes of the components) by application of simulated operating loads representative of the operating loads predicted in an interval of the operational life of the aircraft, for example on the basis of the missions for which the aircraft is intended, and on the correlation, in a condition of use during the operational life of the aircraft, between the operating loads predicted in a corresponding simulated condition of use and the operating loads acting on the structure of the aircraft (the aircraft as a whole or one or more of its components) in the actual operating condition, by means of which the performance capacity of the structure is deduced, for example in the current condition of use or in a predetermined successive condition of use.

The operating loads acting on the structure of the aircraft in the actual operating condition are deduced from the state of the structure of the aircraft monitored in the condition of use. For this purpose, the structure of the aircraft under examination is fitted with a predetermined number of state sensors, preferably deformation sensors, located at detection points selected on the basis of the morphological complexity of the structure.

A presumed operational stress on the structure under examination is estimated on the basis of the deformations detected during use, by means of a model of the structural behaviour of the aircraft, advantageously a linear model, determined in advance on the basis of corresponding simulated conditions of use.

The expression "corresponding simulated conditions of use" signifies the set of simulated loads and the state of the structure on which said loads act, calculated on the basis of an evolution model of the structural behaviour of the aircraft structure in a plurality of simulated conditions of use similar to the actual conditions. An evolution model of the aircraft structure is advantageously a model of the structure which varies in the course of the operational life of the structure itself as a function of the stresses and events that have affected it in the preceding missions.

The correlation between the operating loads predicted by the simulated condition of use and the loads acting on the aircraft structure in the actual operating condition is conveniently an algebraic comparison adapted to determine the extent to which the actual loads "conform" to the predicted design loads. If the value of said actual loads in a given mission, throughout the mission, is equal to the corresponding value of the design operating loads for this mission, with allowance for the history of the aircraft, the aircraft in the mission is considered to conform to the design. If the value of the actual loads for (the duration of) a given mission is greater than the corresponding value of the design loads for this mission, then the aircraft is considered to be excessively stressed, and its performance must be reduced (otherwise the operational life of the aircraft may be reduced, for example, or unpredicted instabilities may be initiated). The aircraft that will be constructed subsequently must be redesigned to be more "robust", that is to say more resistant to the predicted stresses. If the value of the actual loads for (the duration of) a given mission is less than the corresponding value of the design loads for this mission, then the aircraft is considered to be under-stressed, and therefore its performance could be increased (for example, by increasing the speed, thereby reaching the objective sooner and creating less pollution). The aircraft that will be constructed subsequently may be redesigned to be less "robust", thereby providing savings in terms of fuel consumption or pollution.

The performance capacity of the structure is represented in general by the set of its structural performances (the rating of the aircraft, for example) and is typically identified as the speed of the aircraft in flight (which directly determines the stresses to which the structure is exposed), this speed affecting the flight time and therefore the operating time of the engines, and ultimately the amount of pollutants produced and emitted into the atmosphere.

Advantageously, the method proposed by the invention can be applied in many technological fields (civil or military aviation, helicopters, space) where the need for safety must be met in the extreme performance conditions required by the designed technology.

<u>Brief description of the drawings</u>

Further characteristics and advantages of the invention will be disclosed more fully in the following detailed description of an embodiment of the invention, provided by way of non-limiting example, with reference to the attached drawings, in which:

Figure 1 is an exemplary block diagram of the method of prognostics proposed by the invention applied to an aircraft;
Figure 2 shows an example of an aircraft structure and a system of forces acting on it, indicating the points of detection of the state of the aircraft, that is to say the locations of the sensors of the deformation of the structure; and
Figure 3 is an exemplary block diagram of the method of prognostics proposed by the invention in the more general context of the production of an aircraft;

Detailed description

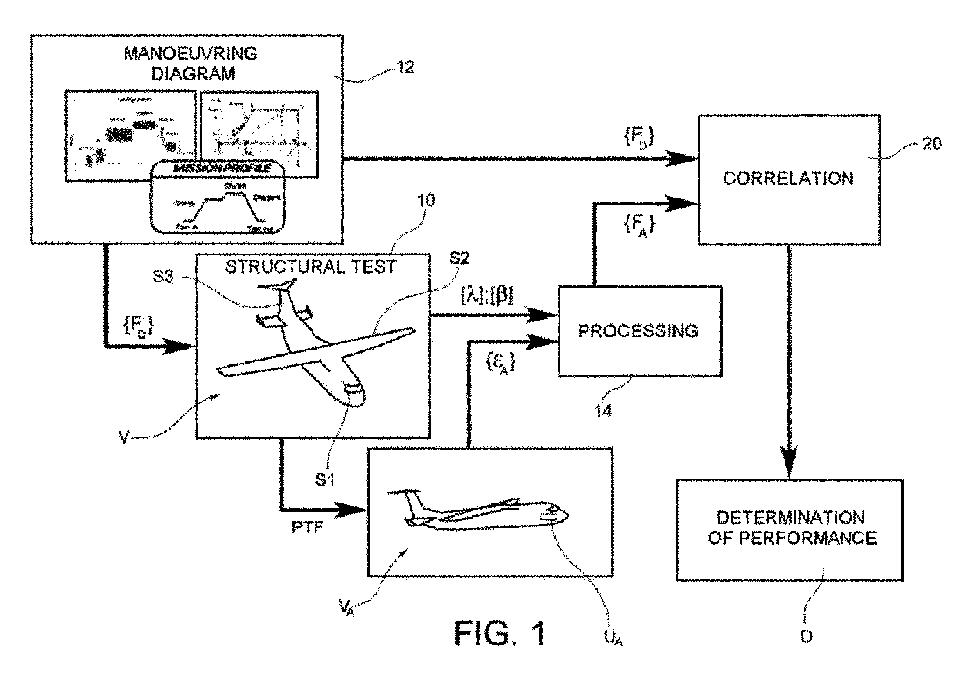

An example of a system and a method of structural prognostics in the preferred application to an aircraft is shown schematically in Figure 1.

A prototype of the aircraft is indicated as a whole by V in block 10, and some of its structural parts whose condition of integrity or faultiness is to be monitored are shown, for example the fuselage S1, the wing structure S2 and the tail assembly S3. A set of sensors is provided on each part, at predetermined detection points, the sensors being adapted to detect a quantity indicative of the state of the aircraft structures, for example the local static deformation (in more than one direction if necessary).

A block 12 represents an electronic design system for developing one or more analytical representations of the conditions of use and loading of the aircraft prototype V for the purpose of conducting structural tests in block 10. The structural tests are among the most significant parameters for the identification of the constructional characteristics of aeronautical components, since they provide information on the performance of the aircraft as well as assurance of flight quality (airworthiness). The permission to fly (PTF) for similar aircrafts in use $V_A$ is commonly granted on the basis of the outcome of these tests on a prototype aircraft V for a predetermined period.

The system in block 12 is designed to receive input use data supplied by a designer, including one or more mission profiles for the aircraft, corresponding manoeuvring diagrams and load conditions, pressurization cycles, squalls, manoeuvres of take-off, landing and ground circulation, and faults in the structure.

The set of this information over time, represented by a discrete distribution of the external forces acting on the aircraft V, together with the localization of the tension or deformation responses of the structure, representative of the state of the structure subjected to the aforesaid forces, provide the parameters for the simulation of the whole operational life of the aircraft.

The representation of the aircraft can therefore be described schematically as a system (the aircraft itself) whose input is composed of the stresses (forces or loads), while its output is composed of the tension quantities in response (deformations).

Advantageously, in order to evaluate the actual behaviour of the performance and properties of an aircraft subjected to a structural test, a linear model is built, relating the input variables (loads or forces) with the output variables (deformations or state).

In the remainder of this description, a linear model of an aircraft structure is considered, and the representation of the structural tests comprises a finite set of forces $\{F\} = \{F_1, F_2,..., F_M\}$ acting on the aircraft structure V in a discrete set of application points, causing a field of deformations detected at a number N of points on the structure of the aircraft, that is to say a set of N deformations $\{\varepsilon\} = \{\varepsilon_1, \varepsilon_2,..., \varepsilon_N\}$.

This type of model, which is valid up to the external static limit loads, is considered to be a correct approach, since it represents the behaviour of the aircraft in real conditions with a good degree of approximation.

The block 10 comprises a calculation module designed to determine the parameters representative of the model of the aircraft structure as a function of the stresses specified at the input and the deformations detected at the output.

If $\{F_D\} = \{F_{1D}, F_{2D},..., F_{MD}\}$ denotes the set of forces acting on the aircraft during the structural tests conducted in the laboratory on a prototype aircraft, and $\{\varepsilon_D\} = \{\varepsilon_{1D}, \varepsilon_{2D},..., \varepsilon_{ND}\}$ denotes the set of deformations acquired by the sensors ($\{F\}$ and $\{\varepsilon\}$ are available on the completion of every test segment specified by the load spectrum Fatigue, Static, Survey,...), then the model used can be represented analytically by the following linear relationship (1):

$$\varepsilon_i = \gamma_{0i} + \alpha_{ij}F_j$$

where i =1... N, j = 1... M.
and, by extension, by the system of equations (2):

$$\begin{cases} \varepsilon_1 = \gamma_{0,1} + \alpha_{1,1}F_1 + \alpha_{1,2}F_2 + ... + \alpha_{1,j}F_j + ... + \alpha_{1,M}F_M \\ \varepsilon_2 = \gamma_{0,2} + \alpha_{2,1}F_1 + \alpha_{2,2}F_2 + ... + \alpha_{2,j}F_j + ... + \alpha_{2,M}F_M \\ \quad . \\ \varepsilon_i = \gamma_{0,i} + \alpha_{i,1}F_1 + \alpha_{i,2}F_2 + ... + \alpha_{i,j}F_j + ... + \alpha_{i,M}F_M \\ \quad . \\ \varepsilon_N = \gamma_{0,N} + \alpha_{N,1}F_1 + \alpha_{N,2}F_2 + ... + \alpha_{N,j}F_j + ... + \alpha_{N,M}F_M \end{cases}$$

where $\gamma_{0i}$, and $\alpha_{ij}$ are the parametric coefficients of the system which characterize the aircraft model.

The present invention is based on the consideration that, if the structural behaviour of the aircraft used for the laboratory tests (a prototype sample taken from a fleet of similar aircraft) is represented, with a good degree of approximation, by the linear model shown above which correlates the aforesaid input and output quantities, then the structural behaviour of all the similar aircrafts in use, indicated by $V_A$, can also be represented by a similar model.

An aircraft in use $V_A$ is fitted with a set of deformation sensors of a known type, for example surface-mounted sensors or sensors embedded in the structure, distributed at predetermined detection points, these sensors being adapted to detect a quantity indicative of the state of the aircraft structure, for example the local static deformation (in more than one direction if necessary). The sensors are connected (electrically, optically or via a wireless link) to an on-board electronic unit $U_A$, to which they transmit respective signals representative of the detected quantities, said on-board electronic unit $U_A$ being adapted to associate the signals acquired from the sensors with values of deformation of the structure. The detection points in an aircraft in use $V_A$ are selected at the same position as the predetermined detection points in the aircraft V subjected to the laboratory structural tests.

While both of the sets $\{F_D\}$ and $\{\varepsilon_D\}$ are known for the laboratory structural tests on a prototype sample of an aircraft V, in the case of aircraft in use $V_A$ it is only the set of deformations $\{\varepsilon_A\}$ that is detected, not the set of stresses $\{F_A\}$ which is an unknown data element.

Given the assumption of analogy between the linear analytic models of the aircraft V subjected to testing and those of the aircrafts $V_A$ in use, the aforesaid linear model can be made reversible, according to relationship (3):

$$\mathbf{F}_j = \lambda_j + \beta_{ji}\varepsilon_i,$$

where i =1... N, j = 1... M,
which expresses the set of stresses to be determined, which have generated the deformations detected in use.

In relationship (3), the values of $\{\varepsilon\}$ can be acquired by means of the on-board deformation sensors of an aircraft in use $V_A$, and indicated below by $\{\varepsilon_A\}$, and, for the purpose of calculating in an analytical or numeric way the unknown stresses $\{F\}$, indicated below as $\{F_A\}$, to which the aircraft $V_A$ has been subjected in use, the linear combination parameters or transformation quantities $\lambda_j$ and $\beta_{ji}$ must be determined.

In order to determine the parametric quantities $\lambda_j$ and $\beta_{ji}$, the calculation module in block 10 proceeds by considering relationship (3) in the extended form of the system of equations (4):

$$\begin{cases} F_1 = \lambda_1 + \beta_{1,1}\varepsilon_1 + \beta_{1,2}\varepsilon_2 + ... + \beta_{1,i}\varepsilon_j + ... + \beta_{1,N}\varepsilon_N \\ \quad . \\ F_j = \lambda_j + \beta_{j,1}\varepsilon_1 + \beta_{j,2}\varepsilon_2 + ... + \beta_{j,i}\varepsilon_i + ... + \beta_{i,N}\varepsilon_N \\ \quad . \\ F_M = \lambda_M + \beta_{M,1}\varepsilon_1 + \beta_{M,2}\varepsilon_2 + ... + \beta_{j,i}\varepsilon_i + ... + \beta_{M,N}\varepsilon_N \end{cases}$$

which is solved analytically or numerically by applying, for example, the multilinear least squares method, which minimizes the linear system to the "best" of the least squares.

In detail, if P is the number of structural test sessions conducted in the laboratory on the aircraft V subjected to the structural tests, and $\{F_D\}$ and $\{\varepsilon_D\}$ are, respectively, the set of stresses and deformations determined in the laboratory, then the system of equations (5) is minimized:

$$\Sigma^{P}[\{\mathbf{F}_{D}\} - \{\lambda\} - |\beta|\{\mathbf{\epsilon}_{D}\}]^{2}$$

For example, in order to determine the parametric quantities $\lambda_j$ and $\beta_{ji}$ which identify $F_1$, we have (6):

$$\begin{cases} \dfrac{\partial}{\partial \lambda_1} \sum \left[\{F\}-\{\lambda\}-|\beta|\{\epsilon\}\right]^2 = 0 \Rightarrow 2\sum\left(F_1 - \lambda_1 - \beta_{1,1}\epsilon_1 - \beta_{1,2}\epsilon_2 - ... - \beta_{1,i}\epsilon_j - ... - \beta_{1,N}\epsilon_N\right) = 0 \\ . \\ \dfrac{\partial}{\partial \beta_{1,i}} \sum \left[\{F\}-\{\lambda\}-|\beta|\{\epsilon\}\right]^2 = 0 \Rightarrow 2\sum\left(F_1 - \lambda_1 - \beta_{1,1}\epsilon_1 - \beta_{1,2}\epsilon_2 - ... - \beta_{1,i}\epsilon_j - ... - \beta_{1,N}\epsilon_N\right)\cdot \epsilon_j = 0 \\ . \\ \dfrac{\partial}{\partial \beta_{1,N}} \sum \left[\{F\}-\{\lambda\}-|\beta|\{\epsilon\}\right]^2 = 0 \Rightarrow 2\sum\left(F_1 - \lambda_1 - \beta_{1,1}\epsilon_1 - \beta_{1,2}\epsilon_2 - ... - \beta_{1,i}\epsilon_j - ... - \beta_{1,N}\epsilon_N\right)\cdot \epsilon_N = 0 \end{cases}$$

which can also be written as (7):

$$\begin{cases} \sum F_1 = P\lambda_1 + \beta_{1,1}\sum \epsilon_1 + \beta_{1,2}\sum \epsilon_2 + ... + \beta_{1,i}\sum \epsilon_i + ... + \beta_{1,N}\sum \epsilon_N \\ ... \\ \sum F_1\epsilon_i = \lambda_1\sum \epsilon_i + \beta_{1,1}\sum \epsilon_1\epsilon_i + \beta_{1,2}\sum \epsilon_2\epsilon_i + ... + \beta_{1,i}\sum \epsilon_i^2 + ... + \beta_{1,N}\sum \epsilon_N\epsilon_i . \\ ... \\ \sum F_1\epsilon_N = \lambda_1\sum \epsilon_N + \beta_{1,1}\sum \epsilon_1\epsilon_N + \beta_{1,2}\sum \epsilon_2\epsilon_N + ... + \beta_{1,i}\sum \epsilon_i\epsilon_N + ... + \beta_{1,N}\sum \epsilon_N^2 . \end{cases}$$

and in matrix notation (8):

$$\begin{Bmatrix} \sum F_1 \\ . \\ \sum F_1\epsilon_i \\ . \\ \sum F_1\epsilon_N \end{Bmatrix} = \begin{vmatrix} P & \sum \epsilon_1 & \sum \epsilon_2 & . & \sum \epsilon_j & . & \sum \epsilon_N \\ . & . & . & . & . & . & . \\ \sum \epsilon_j & \sum \epsilon_1\epsilon_j & \sum \epsilon_2\epsilon_j & . & \sum \epsilon_j^2 & . & \sum \epsilon_N\epsilon_j \\ . & . & . & . & . & . & . \\ \sum \epsilon_N & \sum \epsilon_1\epsilon_N & \sum \epsilon_2\epsilon_N & . & \sum \epsilon_j\epsilon_N & . & \sum \epsilon_N^2 \end{vmatrix} \begin{Bmatrix} \lambda_1 \\ . \\ \beta_{1,i} \\ . \\ \beta_{1,N} \end{Bmatrix}$$

Introducing an abbreviated matrix notation:

$$\mathbf{F}_D = |A|\,\xi_D$$

we have

$$|A|^T \mathbf{F}_D = |A|^T |A|\,\xi_D ,$$

and if the rank of A is equal to P, then |A| is invertible and the following relationship is true:

$$\xi_D = (A^T A)^{-1} F_D.$$

Therefore, if the inputs $F_D$ and outputs $\xi_D$ are known, the parameters of the model $\lambda_1$ and $\beta_{1,1}, \beta_{1,2}, ..., \beta_{1,N}$ can be determined.

A processing unit 14 receives at its input the parameters $\{\lambda\}$ and $\{\beta\}$ characterizing the model of the aircraft in use $V_A$ from the calculation module of block 10, and the values of the deformations detected at the relevant points of the aircraft in use $V_A$ from the aircraft itself.

By applying relationship (3), that is to say:

$$F_{Aj} = \lambda_j + \beta_{ji}\varepsilon_{Ai},$$

where i =1... N, j = 1... M,

the processing unit 14 determines the set of stresses $\{F_A\}$ that determine the tension field to which the aircraft in use $V_A$ is subjected in real time as a function of the deformations detected in real time, or the set of stresses $\{F_A\}$ to which the aircraft $V_A$ has been subjected in the execution of past missions as a function of the deformations detected historically in the past missions.

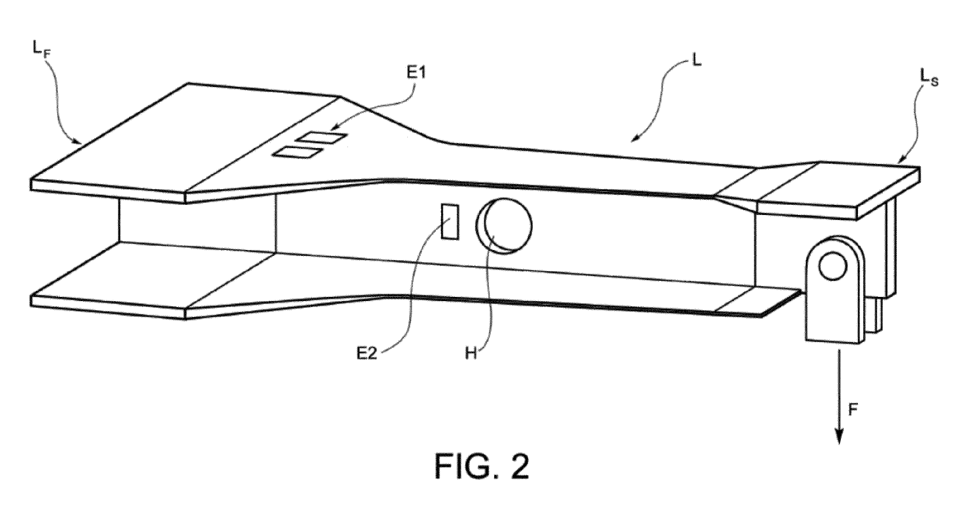

An example of a structure to which the method and system of prognostics proposed by the invention is applied is shown in Figure 2, in the form of a floor beam L embedded at one end $L_F$ in a fuselage of the aircraft and supported at the opposite end $L_S$ by an upright for connection to the fuselage, at right angles to the beam. The beam L is stressed, by way of example, by a force F due to the effects of pressurization in ascent and descent of the aircraft, acting at the end $L_S$ perpendicularly to the axis of longitudinal extension of the beam. In the design and structural tests phase, the beam L is stressed with a force F acting at the end $L_S$ by means of a jack. The floor beam L is fitted with three sensors, for example strain gauge sensors with an electrical resistance signal variable with the deformation, located in suitable areas and adapted to detect the deformations of the structure in two orthogonal planes, for example a pair of first sensors E1 adapted to detect the flexion of the beam in the proximity of the embedding area and a second sensor E2 adapted to detect the flexion of the beam in the vicinity of a lightening hole H of the structure.

An operational aircraft having a similar floor section $L_A$ is fitted with sensors E1A and $E2_A$ located at the areas in which the sensors E1 and E2 are located on the beam subjected to structural tests.

The processing unit 14 determines the stress $\{F_A\}$ to which the section $L_A$ is subjected at a given moment of its operational life on the basis of values of deformation $\{\varepsilon_{A1}\}$ and $\{\varepsilon_{A2}\}$ measured by the sensors $E1_A$ and $E2_A$ and on the basis of the model of the section determined as a function of the values of stress $\{F_D\}$ and of deformation $\{\varepsilon_{D1}\}$, and those $\{\varepsilon_{D2}\}$ obtained from structural tests in a number P of successive simulated operating conditions (loading sessions).

The linear model of the section L is

$$F = a + b \bullet \varepsilon_1 + c \bullet \varepsilon_2.$$

The calculation module of block 10 is designed to apply a least squares method:

$$\Sigma [F - a - b\varepsilon_1 - b\varepsilon_2]^2 = \min$$

resulting in:

$$\begin{cases} \dfrac{\partial}{\partial a} \sum \left[ F - a - b\varepsilon1 - c\varepsilon2 \right]^2 = 0 \Rightarrow 2\sum \left( F - a - b\varepsilon1 - c\varepsilon2 \right) = 0 \\[2mm] \dfrac{\partial}{\partial b} \sum \left[ F - a - b\varepsilon1 - c\varepsilon2 \right]^2 = 0 \Rightarrow 2\sum \left( F - a - b\varepsilon1 - c\varepsilon2 \right)\varepsilon1 = 0 \\[2mm] \dfrac{\partial}{\partial c} \sum \left[ F - a - b\varepsilon1 - c\varepsilon2 \right]^2 = 0 \Rightarrow 2\sum \left( F - a - b\varepsilon1 - c\varepsilon2 \right)\varepsilon2 = 0 \end{cases}$$

$$\begin{cases} \sum F = aP + b\sum \varepsilon 1 + c\sum \varepsilon 2 \\ \sum F\varepsilon 1 = a\sum \varepsilon 1 + b\sum (\varepsilon 1)^2 + c\sum (\varepsilon 1 \cdot \varepsilon 2) \\ \sum F\varepsilon 2 = a\sum \varepsilon 2 + b\sum (\varepsilon 1 \cdot \varepsilon 2) + c\sum (\varepsilon 2)^2 \end{cases}$$

and, applying the matrix calculation rules:

$$a = \frac{\begin{Vmatrix} \sum F & \sum \varepsilon 1 & \sum \varepsilon 2 \\ \sum F\varepsilon 1 & \sum (\varepsilon 1)^2 & \sum (\varepsilon 1 \cdot \varepsilon 2) \\ \sum F\varepsilon 2 & \sum (\varepsilon 1 \cdot \varepsilon 2) & \sum (\varepsilon 2)^2 \end{Vmatrix}}{\begin{Vmatrix} P & \sum \varepsilon 1 & \sum \varepsilon 2 \\ \sum \varepsilon 1 & \sum (\varepsilon 1)^2 & \sum (\varepsilon 1 \cdot \varepsilon 2) \\ \sum \varepsilon 2 & \sum (\varepsilon 1 \cdot \varepsilon 2) & \sum (\varepsilon 2)^2 \end{Vmatrix}}$$

$$b = \frac{\begin{Vmatrix} P & \sum F\varepsilon 1 & \sum \varepsilon 2 \\ \sum \varepsilon 1 & \sum F(\varepsilon 1)^2 & \sum (\varepsilon 1 \cdot \varepsilon 2) \\ \sum \varepsilon 2 & \sum F(\varepsilon 1 \cdot \varepsilon 2) & \sum (\varepsilon 2)^2 \end{Vmatrix}}{\begin{Vmatrix} P & \sum \varepsilon 1 & \sum \varepsilon 2 \\ \sum \varepsilon 1 & \sum (\varepsilon 1)^2 & \sum (\varepsilon 1 \cdot \varepsilon 2) \\ \sum \varepsilon 2 & \sum (\varepsilon 1 \cdot \varepsilon 2) & \sum (\varepsilon 2)^2 \end{Vmatrix}}$$

$$c = \frac{\begin{Vmatrix} P & \sum \varepsilon 1 & \sum F\varepsilon 2 \\ \sum \varepsilon 1 & \sum (\varepsilon 1)^2 & \sum F(\varepsilon 1 \cdot \varepsilon 2) \\ \sum \varepsilon 2 & \sum (\varepsilon 1 \cdot \varepsilon 2) & \sum F(\varepsilon 2)^2 \end{Vmatrix}}{\begin{Vmatrix} P & \sum \varepsilon 1 & \sum \varepsilon 2 \\ \sum \varepsilon 1 & \sum (\varepsilon 1)^2 & \sum (\varepsilon 1 \cdot \varepsilon 2) \\ \sum \varepsilon 2 & \sum (\varepsilon 1 \cdot \varepsilon 2) & \sum (\varepsilon 2)^2 \end{Vmatrix}}$$

The values of the stresses in use $\{F_A\}$ are then compared with the values of the stresses evaluated in the design phase in the performed structural tests $\{F_D\}$, in a correlation module 20, for example a module adapted to make an algebraic comparison between the values of the stresses.

By correlation analysis between the values of the stresses in use $\{F_A\}$ and the values of the stresses in the design phase $\{F_D\}$, it is possible to determine:

(a) whether it is necessary to degrade the performance of the aircraft under examination, for example because the stresses in use are greater than those expected in the design phase, on the basis of which the operating conditions (missions) of the aircraft were simulated;
(b) whether it is possible to enhance the performance of the aircraft under examination, for example because the stresses in use are smaller than those expected in the design phase, on the basis of which the operating conditions (missions) of the aircraft were simulated; and
(c) more generally, when to ground an aircraft for routine non-destructive testing and how to improve a fleet of aircraft.

The degradation of the performance of the aircraft includes, for example, a reduction of the operating speed of the same aircraft in the present and future missions, or - in the design or construction of a similar aircraft - an increase in the robustness (and consequently the weight) of the structure.

The enhancement of the performance of the aircraft includes, for example, an increase of the operating speed of the same aircraft in the present and future missions, or - in the design or construction of a similar aircraft - a lightening of the structure.

The correlation module 20 is advantageously connected to a signalling unit D adapted to represent the state of integrity or faultiness of the monitored structures, and the determination of the possible performance in the next operating conditions, to an operator, for example the pilot of the aircraft or a maintenance operative, either visually, by text and mapping on a screen, or electronically, by issuing a report.

The technical solutions for the implementation of the calculation module of block 10 and the processing unit 14 herein referred to are considered to be well-known in the art and will not be described further in this document, since they are not in themselves relevant for the purposes of the implementation and understanding of the present invention.

Obviously, as will be clear to a person skilled in the art, the illustrated method may be repeated cyclically, for example at predetermined periodic intervals according to a previously established verification plan, or for each operating mission.

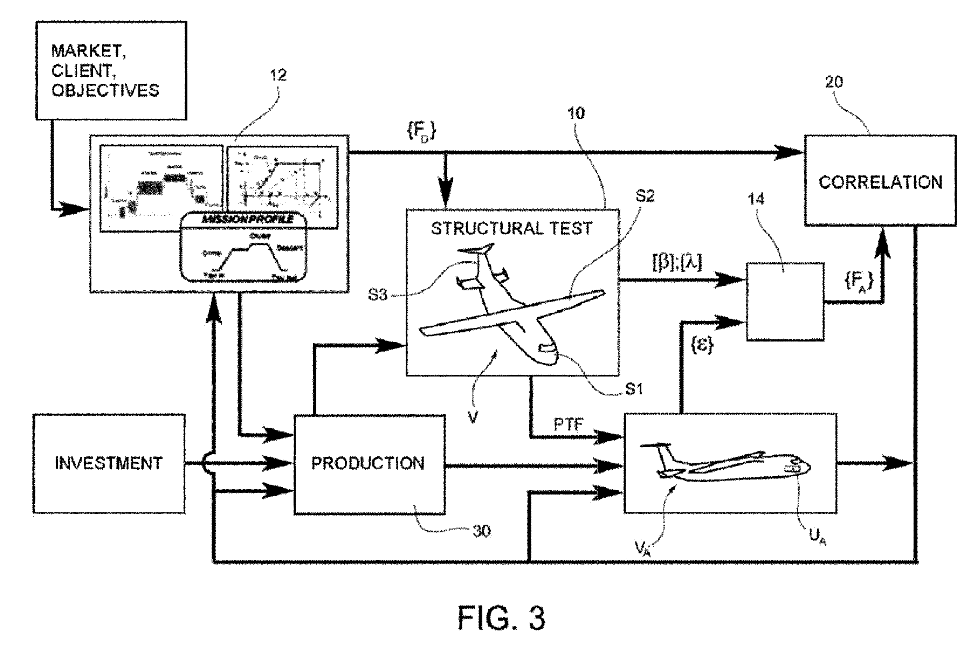

A comprehensive picture of the methodology proposed by the invention and its application to the more general field of aircraft design is shown in the block diagram of Figure 3.

The block diagram of Figure 3 comprises the same functional blocks as the diagram in Figure 1, but extends their application to the more general context of aircraft design. In particular, the diagram of Figure 3 shows the data input into the design block 12, which represent the design specifications of an aircraft, and include, purely by way of example, the results of market analysis of the performance requirements of aircraft for a predetermined designated use, the technical specifications dictated by a client, and the production objectives defined by the aircraft manufacturer.

The diagram of Figure 3 also shows a production block 30 representative of the step of production of the designed aircrafts, which operates on the basis of input data comprising the design data, the financial investments of the manufacturer, and the results of the process of determining the performance of existing aircrafts, together with the notification of problems in use (which also affect the upstream design block 12), and supplies at its output the test aircraft V and the operational aircrafts $V_A$.

The diagram of Figure 3 also shows that the design block 12 additionally operates on the basis of inputs representative of the results of the process of determining the performance of the existing aircrafts together with the notification of problems in use, which are not intended solely to notify a pilot in real time of the performance that can be achieved by the aircraft in the execution of the current mission, but also to notify to a maintenance operative the state of integrity or faultiness of the monitored structures and the determination of the possible performance in the execution of future missions.

Advantageously, the solution described makes it possible to know, in real time, whether the aircraft is within its structural certification/design perimeter. Additionally, all inspections can be optimized and thus made more economical (that is to say, carried out only when they are actually useful), and the greater efficiency of the mission profiles leads to a reduction of costs in terms of fuel and flying hours of the aircraft. In the final analysis, this also makes it possible to contribute to the step of design for aircraft improvement.

Naturally, the principle of the invention remaining the same, the embodiments and details of construction may be varied widely with respect to those described and illustrated, which have been given purely by way of non-limiting example, without thereby departing from the scope of protection of the present invention as defined by the attached claims.

**Claims**

1. Method for the prognostics of a structure subjected to loads, in particular an aircraft structure, **characterized in that** it comprises the steps of:

   - determining by structural testing a model of the structure representative of a relationship between loads acting on the structure in at least one simulated operating condition, and a quantity indicative of the state of the structure as modified in the presence of said loads, at a predetermined number of detection points;
   - detecting the values of said quantity indicative of the state of the structure at a corresponding predetermined number of detection points of the structure in a condition of use;
   - estimating, by means of the model of the structure, the loads acting on the structure in the condition of use on the basis of the detected values of the state quantity;
   - correlating the value of the estimated loads acting on the structure in the condition of use with the value of the loads acting on the structure in the corresponding simulated operating condition; and
   - determining at least one performance of the aircraft structure based on the outcome of said correlation.

2. Method according to Claim 1, wherein correlating the value of the estimated loads acting on the structure in the condition of use with the value of the loads acting on the structure in the corresponding simulated operating condition comprises comparing the value of the estimated loads acting on the structure in the condition of use with the value of the loads acting on the structure in the corresponding simulated operating condition.

3. Method according to Claim 2, comprising the step of degrading at least one performance of the structure if the value of the estimated loads acting on the structure in the actual operating condition is greater than the value of the loads acting on the structure in the corresponding simulated operating condition.

4. Method according to Claim 3, wherein degrading at least one performance of the structure includes reducing the operating speed of the aircraft.

5. Method according to Claim 2, comprising the step of enhancing at least one performance of the structure if the value of the loads acting on the structure in the actual operating condition is less than the value of the loads acting on the structure in the corresponding simulated operating condition.

6. Method according to Claim 5, wherein enhancing at least one performance of the structure includes increasing the operating speed of the aircraft.

7. Method according to any one of the preceding claims, wherein said structural tests are conducted on a prototype aircraft.

8. Method according to any one of the preceding claims, wherein said loads acting on the structure in simulated operating conditions are representative of the operating loads expected on the structure in a range of the operational life of the aircraft.

9. Method according to any one of the preceding claims, wherein said quantity indicative of the state of the structure includes the deformations of the structure.

10. Method according to any one of the preceding claims, wherein said model of the structure is a linear model.

11. Method according to any one of the preceding claims, wherein said loads acting on the structure in at least one simulated operating condition are determined on the basis of an evolution model of the behaviour of the structure in a plurality of simulated operating conditions.

12. System for the prognostics of a structure subjected to loads, in particular an aircraft structure, **characterized in that** it comprises:

- a prototype structure for conducting structural tests adapted to determine a relationship between the loads acting on the structure in at least one simulated operating condition, and a quantity indicative of the state of the structure as modified in the presence of said loads;
- a plurality of detection sensors located at a predetermined number of detection points of the structure;
- storage means comprising a model of the structure representative of a relationship between loads acting on the structure in at least one simulated operating condition, and a quantity indicative of the state of the structure as modified in the presence of said loads, at said predetermined number of detection points; and
- processing means designed to execute a method for the prognostics of a structure subjected to loads according to any one of Claims 1 to 11.

13. Computer program or group of programs executable by a processing system, comprising one or more code modules for executing a method for the prognostics of a structure subjected to loads according to any one of Claims 1 to 11.

FIG. 1

FIG. 2

EP 2 957 883 A2

FIG. 3

EP 2 957 883 A2